(19) **Europäisches Patentamt**
**European Patent Office**
**Office européen des brevets**

(11) **EP 1 750 118 B1**

(12) **EUROPEAN PATENT SPECIFICATION**

(45) Date of publication and mention
of the grant of the patent:
**27.03.2013 Bulletin 2013/13**

(51) Int Cl.:
***G01N 23/223*** *(2006.01)*

(21) Application number: **06014823.6**

(22) Date of filing: **17.07.2006**

(54) **Method for performing x-ray analysis**

Verfahren zur Durchführung von Röntgenuntersuchungen

Procédé pour effectuer une analyse de rayons x

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.07.2005 NL 1029645**

(43) Date of publication of application:
**07.02.2007 Bulletin 2007/06**

(73) Proprietor: **Panalytical B.V.**
**7602 EA Almelo (NL)**

(72) Inventors:
• **Brons, Gustaaf Christian Simon**
**7631 KN Ootmarsum (NL)**
• **Hegeman, Petronella Emerentiana**
**7622 EK Borne (NL)**

(74) Representative: **Mink-Lindenburg, Charlotte Hildegard et al**
**Octrooibureau Mink B.V.**
**Twentepoort Oost 61-25**
**7609 RG Almelo (NL)**

(56) References cited:
**EP-A- 0 639 766** **EP-A- 1 170 755**
**WO-A-2004/008128** **US-A1- 2003 142 781**

• **PATENT ABSTRACTS OF JAPAN vol. 2003, no. 12, 5 December 2003 (2003-12-05) -& JP 2003 329621 A (SHIMADZU CORP), 19 November 2003 (2003-11-19)**
• **NIKITINA S V ET AL: "X-ray fluorescence analysis on the base of polycapillary Kumakhov optics" REVIEW OF SCIENTIFIC INSTRUMENTS, AMERICAN INSTITUTE OF PHYSICS, US, vol. 70, no. 7, July 1999 (1999-07), pages 2950-2956, XP012037536 ISSN: 0034-6748**

**Description**

The invention relates to a method for performing X-ray analysis, more particularly analysis of X-ray fluorescence originating from a relatively small irradiated region of a sample, using a device comprising an X-ray tube and at least one capillary lens for focusing the X-rays in a micro-region at a location for a sample for analysis, in addition to a detector for detecting X-ray fluorescence from the sample, wherein the device further comprises at least one energy-dependent filter placed in the optical path between the X-ray tube and the location.

A method as described in the preamble of claim 1 is know from NIKITINA S.V. ET AL : "X-RAY fluorescence analysis on the base of polycapillary Kumakhov optics", Review of scientific Instruments, AIP, vol. 70, no. 7, July 1999, p.2950-2956. X-ray fluorescence (XRF) spectrometry is generally applied for the purpose of identifying and determining concentrations of elements in specimens of materials, be it in solid, liquid or powder form.

There is a wish in different technical fields to irradiate only a relatively small region (micro-region) of a sample for analysis. The desired dimensions of the micro-region to be irradiated lie, as an indication, in the order of magnitude of several tens of to several thousand square micrometres. Particularly in the semiconductor industry, where semi-manufactures are usually analyzed, surrounding electronics in this way remain practically nonirradiated, and the risk of possible damage due to the effect of X-rays can be avoided.

The invention has for its object to provide a method of the type stated in the preamble which fulfils this wish.

The method according to the invention is <u>characterized in that,</u> the method comprises the steps of:

a) determining the desired maximum dimensions ($S_{max}$) for the micro-region;
b) determining the energy ($E_{max}$) of the X-rays associated with the desired maximum dimensions ($S_{max}$) for the micro-region;
c) selecting the energy-dependent filter (3) which is adapted to block in considerable measure X-rays with an energy which is equal to or lower than a predetermined energy value, wherein the energy value is chosen to be substantially equal to the energy ($E_{max}$) determined in step b),

such that the dimensions of the micro-region ($S_{max}$) are substantially bounded within predetermined permissible values.

The X-ray tube and the capillary lens together generate an X-ray beam in a micro-region at the sample location. The invention is based on the insight that the dimensions of the irradiated region at the sample location are energy-dependent: at lower energies the irradiated region is larger. The dimensions of the irradiated region can be bounded within predetermined permissible values by applying an energy-dependent filter placed in the optical path between the X-ray tube and the sample location. The setting of the threshold value of the filter determines the realized dimensions of the irradiated region. The method according to the invention has the further advantage that diffraction peaks occurring at an energy which is equal to or lower than the predetermined energy value of the filter are eliminated. This implies a significant improvement in the reliability of the outcome of the X-ray analysis.

In a first preferred embodiment step c) comprises the steps of:

1. selecting filter material that is suitable for blocking in considerable measure X-rays with an energy which is equal to or lower than the energy ($E_{max}$) determined in step b);
2. determining the transmission characteristic (curve B) in a number of filters with differing thickness of the selected filter material; and
3. selecting a thickness for the filter material associated with a predetermined value for the permissible transmission of X-rays with an energy equal to the energy ($E_{max}$) determined in step b).

The thickness of the filter is preferably smaller than or equal to 300 micrometres. The thickness of the filter must provide an optimum between the desired transmission characteristics of the filter and the intensity per energy value required at the position of the sample location. Preferably the filter comprises aluminium.

In a practical preferred embodiment the filter is placed in the optical path between the X-ray tube and the capillary lens.

In a further preferred embodiment the X-ray tube is adapted to generate an X-ray beam with a microfocus. Suitable low-power microfocus tubes are obtainable in the field.

According to yet another preferred embodiment, the capillary lens is a polycapillary lens. A polycapillary lens is highly suitable for focusing the filtered X-ray beam of the microfocus tube on the sample location.

The invention will be described further on the basis of the drawings, in which:

Figure 1 shows a diagram of a preferred embodiment of the device according to the invention;
Figure 2A shows in a graph the relation between the spot size (curve A) and the transmission of a filter suitable for the invention (curve B) plotted against the energy of the X-rays; and
Figure 2B illustrates in a graph the relation between the transmission and the spot size.

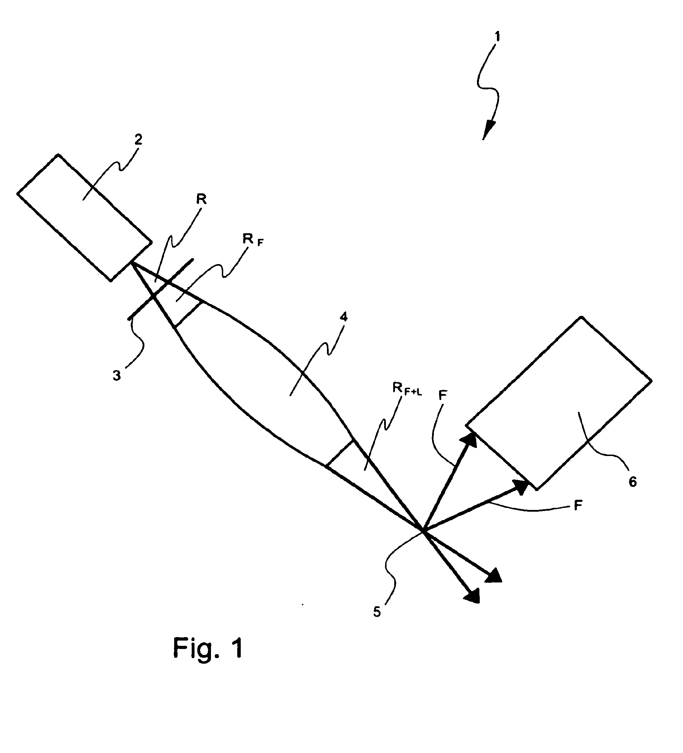

Figure 1 shows schematically the most important components of device 1 according to a preferred embodiment of the invention in their mutual interrelation.

Device 1 is generally intended for analysis of materials using XRF spectrometry.

Device 1 comprises an X-ray tube 2, an energy-dependent filter 3, a capillary lens 4, a sample location 5 and an X-ray detector 6.

X-ray tube 2 is preferably adapted to generate an X-ray beam R from a microfocus. A microfocus is understood to mean a focus on the anode with dimensions in the order of several tens to about 100 micrometres (L+W)/2, this also being referred to in the technical field as "focal spot size". Such an X-ray tube is commercially available and is referred to in the field as a microfocus tube. An example of a suitable microfocus tube is "Series 5000 Packaged X-ray tubes", marketed by Oxford Instruments, X-ray Technology established in Scotts Valley California, United States of America.

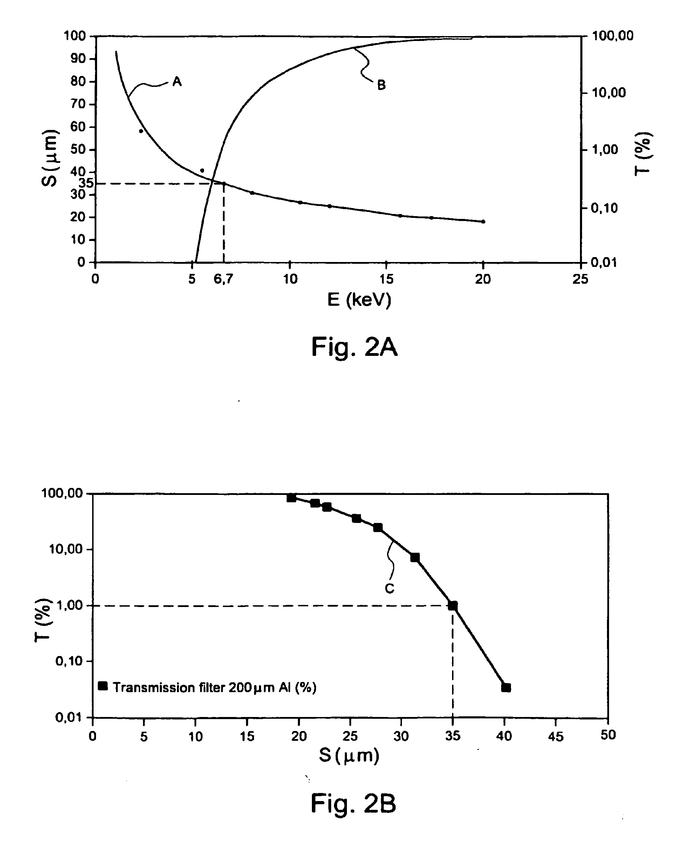

Filter 3 is placed in the optical path between X-ray tube 2 and capillary lens 4. Filter 3 is adapted to block in considerable measure X-rays from beam R with an energy which is equal to or lower than a predetermined energy value. The predetermined energy value depends on the desired dimensions for setting the region to be irradiated, this being illustrated on the basis of figures 2A and 2B. Material with a K-absorption edge which is less than or equal to 2 keV results in a smooth transmission curve for the filter. Different materials meet this requirement, including aluminium, silicon, carbon. The thickness of the filter lies in the range up to 300 micrometres, preferably in the range of 50 to 200 micrometres. The thickness of the filter must be chosen as optimum between the desired transmission characteristics on the one hand and the energy efficiency of the X-ray tube on the other. The X-ray beam passing through filter 3 is designated $R_F$.

Figure 2A shows two curves in one graph: curve A illustrates the spot size S of the X-rays at different energies and curve B shows the transmission characteristic T of a filter suitable for the invention. For the purpose of curve A the spot size associated with the irradiated region, or micro-region, on the sample is plotted on the left on the vertical axis and expressed in micrometre Full Width Half Max (FWHM). The energy of the X-rays expressed in kilo-electron volts is shown on the horizontal axis. Curve A clearly shows the trend that the spot size decreases as the energies increase. For the purpose of curve B the percentage transmission of the filter is shown on the vertical axis.

The graphs show measurements on device 1 according to the invention in the described preferred embodiment. Filter 3 is here an aluminium filter with a thickness of 200 micrometres.

Figure 2B shows a graph with curve C therein which illustrates schematically the resulting spot size of microfocus tube 2 on a sample 5 for analysis after applying the filter 3 as described with reference to figure 2A. The horizontal axis shows the dimensions of spot size S on the sample expressed in micrometre Full Width Half Max (FWHM). The vertical axis shows the percentage transmission T of filter 3.

From curve C can clearly be seen the trend that a minimization of the spot size can be achieved in a device according to the invention. In the preferred embodiment of device 1 can be seen that filter 3 transmits the most X-rays at a spot size of between approximately 20 and 25 FWHM.

By means of the method according to the invention a suitable filter can be selected for a device according to the invention for any intended application.

The method steps are described and elucidated below by means of a numerical example.

In a first step in the desired maximum dimensions $S_{max}$ for the micro-region are determined. In the context of the numerical example the spot size $S_{max}$ is determined at 35 micrometre FWHM.

In a second step the energy $E_{max}$ of the X-rays associated with the desired maximum dimensions $S_{max}$ for the micro-region is determined. This $E_{max}$ can be directly derived from curve A which shows the relation between these two quantities. In the chosen numerical example $E_{max}$ has the value 6.7 keV.

In a third step a filter is selected which is adapted to block in considerable measure X-rays with an energy which is equal to or lower than $E_{max}$, in this numerical example 6.7 keV.

The selection of a suitable filter is carried out according to the invention on the basis of the following steps.

A choice must first be made for a filter material that is suitable for blocking in considerable measure X-rays with an energy which is equal to or lower than $E_{max}$, in this numerical example 6.7 keV. In this example a choice has been made for aluminium.

The transmission characteristic is subsequently determined for one or more filters of differing thickness of the selected filter material. In this example curve B is determined for an aluminium filter of a thickness of 200 micrometres.

In order to select a suitable thickness for the filter, the permissible transmission for X-rays with an energy $E_{max}$ has to be determined. In this numerical example the permissible transmission for 6.7 keV is approximately 1%. The aluminium filter of 200 micrometre thickness is found to readily satisfy this criterion.

It is noted for the sake of completeness that the relation between spot size S and energy E also depends on the capillary 4. Curves A and C must therefore be determined separately for each configuration of device 1.

Capillary lens 4 focuses the beam $R_F$ as a beam $R_{F+L}$ on the sample location 5. Lens 4 can be both a polycapillary and a monocapillary lens. Diverse suitable capillary lenses are commercially available.

During operation device 1 irradiates a relatively small region (micro-region) of a sample at sample location 5. The dimensions of the irradiated micro-region can be derived directly from dimensions of the spot size in micrometre FWHM. The following relation known in the field can be used for this purpose:

$$FWHM/2.36 = sigma$$

wherein 6*sigma shows the so-called footprint, i.e. the dimensions of the region on the sample within which 99.7% of the X-radiation is incident.

The spot size between approximately 20 and 25 FWHM results in a footprint of between 50 and 60 micrometres respectively. Dimensions of the irradiated region, or micro-region, in the order of magnitude of 50 x 50 micrometres are therefore feasible with the embodiment described herein. This makes device 1 particularly suitable for analysis of the composition of so-called wafers in the semiconductor industry.

The device according to the invention has the further important advantage that the diffraction peaks, which occur at energy values falling within the energy range largely blocked by the filter, are generally eliminated. In the shown and described preferred embodiment of device 1 the diffraction peak occurring in a sample Si(100), which is normally visible at 5.5 keV, is for instance eliminated.

Detector 6 is adapted to detect X-ray fluorescence F coming from the irradiated region in the sample. Diverse suitable X-ray detectors are commercially available.

It is noted that device 1 is described in the context of Energy Dispersive (ED) XRF. It will however be apparent to a skilled person in the field that the invention is not limited thereto, but is also very readily applicable in the case of Wavelength Dispersive (WD) XRF. In figure 1 an analyzer crystal (not shown) must then for instance be placed in the optical path between sample location 5 and detector 6.

Finally, the invention is expressly not limited to the described and shown embodiment. In addition to the described combination of a microfocus tube with a polycapillary lens, the combination of a standard X-ray tube with a capillary lens can particularly also be envisaged, even though this is energetically less efficient.

The invention therefore extends generally to any embodiment falling within the scope of the appended claims, as seen in the light of the foregoing description and drawings.

## Claims

1. Method for performing X-ray analysis using a device (1) comprising an X-ray tube (2) and at least one capillary lens (4) for focusing the X-rays in a micro-region at a location (5) for a sample for analysis, in addition to a detector (6) for detecting X-ray fluorescence from the sample, wherein the device further comprises at least one energy-dependent filter (3) placed in the optical path between the X-ray tube and the location (5),

**characterized in that**, method comprises the steps of:

a) determining the desired maximum dimensions ($S_{max}$) for the micro-region;
b) determining the energy ($E_{max}$) of the X-rays associated with the desired maximum dimensions ($S_{max}$) for the micro-region;
c) selecting the energy-dependent filter (3) which is adapted to block in considerable measure X-rays with an energy which is equal to or lower than a predetermined energy value, wherein the energy value is chosen to be substantially equal to the energy ($E_{max}$) determined in step b),

such that the dimensions of the micro-region ($S_{max}$) are substantially bounded within predetermined permissible values.

2. Method as claimed in claim 1, wherein step c) comprises the steps of:

1. selecting filter material that is suitable for blocking in considerable measure X-rays with an energy which is equal to or lower than the energy ($E_{max}$) determined in step b);
2. determining the transmission characteristic (curve B) in a number of filters with differing thickness of the selected filter material; and
3. selecting a thickness for the filter material associated with a predetermined value for the permissible transmission of X-rays with an energy equal to the energy ($E_{max}$) determined in step b).

3. Method as claimed in claim 1 or 2, wherein the thickness of the filter (3) is smaller than or equal to 300 micrometres.

4. Method as claimed in claim 1, 2, or 3, wherein the filter (3) comprises aluminium.

5. Method as claimed in any of the foregoing claims, wherein the filter (3) is placed in the optical path between the X-ray tube (2) and the capillary lens (4).

6. Method as claimed in any of the foregoing claims, wherein the X-ray tube (2) is a microfocus tube.

7. Method as claimed in any of the foregoing claims, wherein the capillary lens (4) is a polycapillary lens.

## Patentansprüche

1. Verfahren zum Durchführen einer Röntgenanalyse unter Verwendung einer Vorrichtung (1), die eine Röntgenröhre (2) und mindestens eine Kapillarlinse (4) zum Fokussieren der Röntgenstrahlen in einem Mikrobereich eines Ortes (5) für eine zu analysierende Probe sowie einen Detektor (6) zum Detektieren von Röntgenfluoreszenz von der Probe umfasst, wobei die Vorrichtung weiterhin mindestens einen energieabhängigen Filter (3) umfasst, der in dem optischen Pfad zwischen der Röntgenröhre und dem Ort (5) angeordnet ist, **dadurch gekennzeichnet, daß** das Verfahren die folgenden Schritte umfasst:

a) Bestimmen der gewünschten maximalen Abmessungen (Smax) des Mikrobereiches;
b) Bestimmen der Energie ($E_{max}$) der Röntgenstrahlen in Abhängigkeit der gewünschten maximalen Abmessungen ($S_{max}$) des Mikrobereiches;
c) Auswählen des energieabhängigen Filters (3), der geeignet ist, in ausreichender Weise Röntgenstrahlen mit einer Energie, welche gleich oder niedriger ist als ein vorgegebener Energiewert, zu blockieren, wobei der Energiewert so ausgewählt wird, daß er im Wesentlichen der in Schritt b.) bestimmten Energie ($E_{max}$) entspricht,

so dass die Abmessungen des Mikrobereiches ($S_{max}$) im Wesentlichen im Bereich von vorgegebenen zulässigen Werten liegen.

2. Verfahren gemäß Anspruch 1, wobei Schritt c.) die folgenden Schritte umfasst:

1. Auswählen eines Filtermaterials, das geeignet ist, in ausreichender Weise Röntgenstrahlen mit einer Energie, welche gleich oder geringer ist als die in Schritt b.) bestimmte Energie ($E_{max}$), zu blockieren;
2. Bestimmen der Durchlasscharakteristika (Kurve B) bei einer Anzahl von Filtern mit unterschiedlicher Dicke des ausgewählten Filtermaterials; und
3. Auswählen einer Dicke des Filtermaterials entsprechend einem vorgegebenen Wert für die zulässige Durchlassrate von Röntgenstrahlen mit einer Energie, die gleich der in Schritt b.) bestimmten Energie ($E_{max}$) ist.

3. Verfahren gemäß Anspruch 1 oder Anspruch 2, wobei die Dicke des Filters (3) kleiner oder gleich 300 $\mu$m ist.

4. Verfahren gemäß den Ansprüchen 1, 2 oder 3, wobei der Filter (3) Aluminium umfasst.

5. Verfahren gemäß einem der vorhergehenden Ansprüche, wobei der Filter (3) in dem optischen Pfad zwischen der Röntgenröhre (2) und der Kapillarlinse (4) angeordnet ist.

6. Verfahren gemäß einem der vorhergehenden Ansprüche, wobei die Röntgenröhre (2) eine Mikrofokusröhre ist.

7. Verfahren gemäß einem der vorhergehenden Ansprüche, wobei die Kapillarlinse (4) eine Polykapillarlinse ist.

## Revendications

1. Procédé pour la réalisation d'une analyse à rayons X utilisant un dispositif (1) comportant un tube à rayons X (2) et au moins une lentille capillaire (4) pour focusser des rayons X dans une microrégion à un endroit (5) pour un échantillon à analyser ainsi qu'un détecteur (6) pour détecter la fluorescence de rayons X de l'échantillon, le dispositif comprenant de plus au moins un filtre (3) dépendant de l'énergie situé dans le chemin optique entre le tube à rayons X et l'endroit (5), **caractérisé en ce que** le procédé comprend les étapes suivantes:

a) Détermination des dimensions maximales souhaitées (Smax) de la microrégion;
b) Détermination de l'énergie ($E_{max}$) des rayons X en fonction des dimensions maximales souhaitées ($S_{max}$) de la microrégion ;
c) Sélection d'un filtre (3) dépendant de l'énergie qui est apte à bloquer de manière considérable des rayons X avec une énergie égale ou inférieure à une valeur d'énergie prédéterminée, la valeur d'énergie étant choisie de manière à être essentiellement identique à l'énergie ($E_{max}$) déterminée dans l'étape b.),

de manière que les dimensions de la microrégion ($S_{max}$) soient essentiellement situées dans une gamme de valeurs autorisées prédéterminées.

2. Procédé selon la revendication 1, dans lequel l'étape c.) comprend les étapes suivantes:

1. Choix d'un matériau de filtre apte à bloquer de manière considérable des rayons X avec une énergie égale ou inférieure à l'énergie ($E_{max}$) déterminée dans l'étape b.) ;
2. Détermination des caractéristiques de transmission (courbe B) dans un nombre de filtres avec une épaisseur différente du matériau de filtre choisi; et
3. Choix d'une épaisseur du matériau de filtre en fonction de la valeur prédéterminée de la transmission autorisée de rayons X d'une énergie égale à celle de l'énergie ($E_{max}$) déterminée dans l'étape b.).

3. Procédé selon la revendication 1 ou la revendication 2, dans lequel l'épaisseur du filtre (3) est inférieure ou égale à 300 $\mu$m.

4. Procédé selon les revendications 1, 2 ou 3, dans lequel le filtre (3) comprend de l'aluminium.

5. Procédé selon l'une des revendications précédentes, dans lequel le filtre (3) est placé dans le chemin optique entre le tube à rayons X (2) et la lentille capillaire (4).

6. Procédé selon l'une des revendications précédentes, dans lequel le tube à rayons X (2) est un tube à microfocus.

7. Procédé selon l'une des revendications précédentes, dans lequel la lentille capillaire (4) est une lentille polycapillaire.

1

2

R

R$_F$

3

4

R$_{F+L}$

F

F

5

6

Fig. 1

Fig. 2A

Fig. 2B

**EP 1 750 118 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NIKITINA S.V. et al.** X-RAY fluorescence analysis on the base of polycapillary Kumakhov optics. *Review of scientific Instruments, AIP,* July 1999, vol. 70 (7), 2950-2956